# EUROPÄISCHE PATENTSCHRIFT

(11) **EP 3 202 636 B1**
(45) Veröffentlichungstag und Bekanntmachung des Hinweises auf die Patenterteilung: **15.09.2021**
(21) Anmeldenummer: 16202860.9
(22) Anmeldetag: 08.12.2016
(51) Int. Cl.: B62B 3/00, B62B 5/00

(54) **TRANSPORTGERÄT**
TRANSPORTATION DEVICE
APPAREIL DE TRANSPORT

(30) Priorität: 28.01.2016 DE 102016101490
(43) Veröffentlichungstag der Anmeldung: 09.08.2017
(73) Patentinhaber: Wanzl GmbH & Co. KGaA, 89340 Leipheim (DE)
(72) Erfinder: Lutzenberger, Thomas, 87739 Loppenhausen (DE); Wanninger, Lothar, 87719 Mindelheim (DE)

(56) Entgegenhaltungen:
- EP-A1- 0 653 341
- EP-A1- 1 640 255
- FR-A1- 2 872 475
- GB-A- 2 501 771
- US-A- 3 942 449

## Beschreibung

Die vorliegende Erfindung betrifft ein von Hand bewegbares Transportgerät mit einem mit Rollen versehenen Fahrgestell, mit einer mit dem Fahrgestell verbundenen Abstellvorrichtung zum Ab- bzw. Einstellen von Waren und einen mit dem Fahrgestell verbundenen Antriebsradschwenkbügel, an dem ein Antriebsrad angeordnet ist.

Transportgeräte dieser Art sind bereits aus dem Stand der Technik bekannt und werden beispielsweise im Bereich Lagerlogistik als sogenannte Kommissionierwagen eingesetzt. Mit diesen Transportgeräten werden teilweise schwere Waren in einem Lager bewegt und um das Verfahren dieser Transportgeräte zu erleichtern, werden diese z.B. mit einem elektromotorisch angetriebenen Antriebsrad versehen.

Die EP 1 242 275 B1 offenbart ein von Hand bewegbares Transportgerät, bei dem zusätzlich zu den am Fahrgestell angeordneten Rollen ein elektromotorisch angetriebenes Antriebsrad vorgesehen ist.

Aus der EP 1 003 663 B1 ist ebenfalls ein von Hand bewegbarer Transportwagen bekannt, der ein fünftes sogenanntes Laufrad aufweist, das elektromotorisch angetrieben ist und die Verfahrbarkeit des Transportwagens erleichtert.

Aus der EP 0 770 535 B1 ist ein stapelbarer Transportwagen bekannt, der fünf an einem Fahrgestell angeordnete Rollen aufweist, wobei die fünfte Rolle zur Stabilitätserhöhung im Zentrum zwischen den vier äußeren am Fahrgestell angeordneten Rollen angeordnet ist.

Aus der US 2,973,823 ist ebenfalls bereits ein Transportwagen bekannt, der eine zusätzliche, mittels einer Antriebseinheit angetriebene Rolle aufweist, die das Verfahren des Transportwagens erleichtert.

Aus der DE 2 058 729 A1 ist eine von einer Batterie gespeiste elektrische Antriebseinrichtung bekannt, die zum Antrieb von elektrischen Kleintransportfahrzeugen, wie Golfwagen oder Kinderautos, verwendet werden kann.

Die FR 2 872 475 A1 und die US 3942449 A offenbaren jeweils ein Transportgerät mit einer Antriebseinrichtung und einem Antriebsrad.

Die EP 0 653 341 A1 zeigt ein Transportgerät mit einem Antrieb und einem Antriebsrad. Insbesondere ist die Antriebseinheit mittels einer Rahmenkonstruktion an einer Bodenwandung des Transportgeräts angebracht.

Auch die EP 1 640 255 A1 zeigt ein Transportgerät bei dem ebenfalls eine Antriebseinheit mit Antriebsrad an einer Rahmenkonstruktion angeordnet ist.

Die GB 2501771 A beschreibt ein Transportgerät bei dem das Antriebsrad mit Antriebseinrichtung federnd an der Unterseite des Transportgeräts gelagert ist.

Um das Fahrverhalten der Transportgeräte der eingangs genannten Art zu verbessern, wäre es wünschenswert, in jeder Fahrsituation des Transportgerätes sicherzustellen, dass eine elektromotorische Antriebsunterstützung erfolgen kann. Diese Aufgabe wird erfindungsgemäß gelöst durch ein Transportgerät mit den Merkmalen des Anspruchs 1.

Die Erfindung basiert auf dem Grundgedanken, die Anpresskraft für das Antriebsrad zu verbessern und hierdurch in möglichst jeder Fahrsituation wie Kurvenfahrten, Geradeausfahrt, Anfahrsituationen, Verzögerung bzw. Abbremsen des Transportgerätes oder Fahrten über einen unebenen Untergrund die Anpressung des Antriebsrades auf den Untergrund, auf dem das Transportgerät bewegt ist, zu verbessern. Durch die Anordnung von erster Masse und Zusatzgewicht zu beiden Seiten des Antriebsrades wird erreicht, dass nicht nur das Eigengewicht des Antriebsrades, sondern beidseitig durch die Gewichtskraft der ersten Masse und des Zusatzgewichtes eine verbesserte und auch gleichmäßigere Anpressung des Antriebsrades auf den Untergrund erreicht werden kann. Diese verbesserte Anpressung des Antriebsrades verhindert beispielsweise bei Kurvenfahrten ein Abheben des Antriebsrades. Bei Geradeausfahrten wird durch die verbesserte Anpressung des Antriebsrades eine gleichmäßige Fahrbewegung ermöglicht. Auch im Zusammenhang mit Anfahrsituationen und einem Abbremsen werden die Fahreigenschaften deutlich verbessert, da durch die erhöhte Anpressung des Antriebsrades gewährleistet ist, dass gewünschte Beschleunigung oder Verzögerung auch umgesetzt werden können und nicht durch ein Durchdrehen des Antriebsrades beim Beschleunigen oder ein Abheben des Antriebsrades beim Verzögern diese Fahrsituationen negativ beeinflussen können.

Die erste Masse kann zumindest teilweise durch die Antriebseinrichtung ausgebildet sein.

Denkbar ist beispielsweise, dass die Antriebseinrichtung einen Motorteil und ein Getriebeteil aufweist. Dabei kann der Getriebeteil in etwa auf Höhe des Antriebsrades angeordnet sein, beispielsweise auf der Achse des Antriebsrades sitzen. Der Motorteil kann versetzt zum Antriebsrad angeordnet sein.

Insbesondere kann vorgesehen sein, dass zumindest das Antriebsrad, die erste Masse, insbesondere ein Teil der Antriebseinrichtung (z.B. der Motorteil) und das Zusatzgewicht nacheinander längs des Antriebsradschwenkbügels angeordnet sind und dass das Antriebsrad zwischen der Antriebseinrichtung und dem Zusatzgewicht angeordnet ist.

Durch den besseren Anpressdruck des Antriebsrades wird es möglich, eine geringere Kurvenführung des Transportgerätes erreichen zu können. Insgesamt werden ruhigere Fahreigenschaften erreicht und es wird auch verhindert, dass der Antriebsradschwenkbügel bei einer Kurvenfahrt aufschwingt oder zu springen beginnt. Des Weiteren wird ein verbessertes Anfahr- und Abbremsverhalten des Transportgerätes erreicht. Außerdem ist eine höhere Massenträgheit des Antriebssystems bereitgestellt, was die Aufschwingneigung reduziert. Durch das Zusatzgewicht und die versetzte Anordnung hier zu der Antriebseinrichtung werden bessere Einstellmöglichkeiten zur Einstellung der Fahreigenschaften erzielt.

Des Weiteren kann vorgesehen sein, dass das Zusatzgewicht am freien Ende des Antriebsradschwenkbügels angeordnet ist. Durch eine derartige Konstruktion wird erreicht, dass am freien Ende des Antriebsradschwenkbügels lediglich Masse, aber keine Elektronik oder die Antriebseinheit angeordnet sind. Dadurch wird ein robustes Design des Transportgerätes möglich, was insbesondere in einer Umgebung, in der eine robuste Konstruktion erforderlich ist, z.B. wegen einem unebenen Untergrund oder dergleichen, von Vorteil ist.

Grundsätzlich ist aber auch denkbar, dass die Antriebseinheit bzw. ein Teil der Antriebseinheit am freien Ende angeordnet ist. Hierdurch wird die Zugänglichkeit zur Antriebseinheit erleichtert. Des Weiteren kann vorgesehen sein, dass das Zusatzgewicht zumindest teilweise als Rundwelle ausgebildet ist. Grundsätzlich ist aber auch eine andere Form einer Masse denkbar, das Zusatzgewicht ist grundsätzlich formunabhängig. Eine Rundwelle lässt sich jedoch beispielsweise einfach aus einem Halbzeug herstellen. Denkbar ist insbesondere, das Zusatzgewicht anzuschweißen oder anzuschrauben. Als Material eignen sich insbesondere Materiale mit einer hohen Dichte und vorzugsweise mit einem Preisrahmen analog zu Stahl. Neben Stahl, Stahllegierungen oder sonstigen Metallen eignen sich insbesondere Zusatzgewichte aus Blei. Denkbar ist beispielsweise, bei einem Transportgerät, das ausgelegt ist, Waren im Bereich zwischen ca. 100 bis 250kg aufzunehmen, ein Zusatzgewicht mit einer Masse von ca. 10kg oder mehr zu verwenden. Grundsätzlich ist es möglich, ein Zusatzgewicht entsprechend des zulässigen Maximalgewichts des Transportgeräts, also Eigengewicht plus Zuladung, zu wählen. Hier wurde herausgefunden, dass eine Abhängigkeit zwischen Beladung und Wagenabmessung besteht. Idealerweise sollte das Verhältnis so gewählt sein, dass eine maximale Dämpfung erreicht wird, was durch eine große Länge des Antriebsradschwenkbügels zur Verringerung des Aufschwingverhaltens (aufgrund großen Hebels) ermöglicht wird und gleichzeitig eine maximal zulässige Gegenkraft erreicht wird, nämlich dass ein Anheben des Wagens bzw. Transportgeräts verhindert wird und dennoch eine Erhöhung des Anpressdrucks für das Antriebsrad gewährleistet wird.

Des Weiteren kann vorgesehen sein, dass im Zusatzgewicht eine Energiequelle, insbesondere eine Batterie oder ein Akkumulator angeordnet ist. Dadurch wird es möglich, die Energieversorgung der Antriebseinrichtung gleichzeitig als Zusatzgewicht zu nutzen.

Es ist vorgesehen, dass der Antriebsradschwenkbügel zumindest teilweise einen Rahmen ausbildet, in dem das Antriebsrad aufgehängt ist. Mit einer Rahmenstruktur wird es möglich, das Antriebsrad beispielsweise nach allen Seiten zu umgreifen und hierdurch eine verbesserte und mechanisch stabilere Aufhängung, die gleichzeitig auch stoßunempfindlicher ist und Schutz für das Rad bietet, zu gewährleisten.

Weiters ist eine Feder vorgesehen, mittels derer der Antriebsradschwenkbügel gefedert ist. Durch eine derartige Federung wird das Schwingverhalten des Antriebsradschwenkbügels beeinflusst und je nach Federeinstellung eine weitere Kraft auf den Antriebsradschwenkbügel und damit auf das Antriebsrad ausgeübt, die zusätzlich zum Anpressen des Antriebsrades beiträgt. Darüber hinaus soll die Feder sicherstellen, dass der Antriebsradschwenkbügel nicht gegen das Fahrgestell schlägt, sondern abgedämpft wird, beispielsweise beim Überfahren von Bodenwellen.

Die Feder kann insbesondere einen zusätzlichen Anpressdruck bereitstellen. Denkbar ist insbesondere, dass die Feder als Druckfeder ausgebildet und eingesetzt wird. Hier kann vorgesehen sein, dass die Feder im montierten Zustand den Antriebsradschwenkbügel vom Fahrgestell abdrückt und somit die Anpressung des Antriebsrades auf den Untergrund zusätzlich unterstützt.

Durch die Ausgestaltung des Antriebsradschwenkbügel und der an dem Antriebsradschwenkbügel angeordneten Komponenten wie Antriebsrad, Zusatzgewicht, erster Masse bzw. Anordnung und Ausgestaltung der Antriebseinheit ist bereits eine gute Anpressung erreicht, so dass die Feder beispielsweise im Vergleich zum Stand der Technik mit geringeren Abmessungen und geringerer Federkraft ausgeführt werden kann.

Es ist vorgesehen, dass das Fahrgestell eine Querstrebe aufweist an der die Feder angelenkt ist. Dies ist insbesondere dann von Vorteil, wenn das Antriebsrad mittig zwischen den Rollen des Fahrgestells angeordnet ist.

Insbesondere kann vorgesehen sein, dass das Antriebsrad, das auch eine fünfte Rolle darstellen kann, mittig bezogen auf die Wagenbreite und Wagenlänge angeordnet ist. Insbesondere sollte vorgesehen sein, dass die fünfte Rolle in der Mitte der Wagenbreite sitzt. Durch eine derartige zentrierte Anordnung wird das Transportgerät nach allen Seiten mit gleichen Fahreigenschaften versehen. Grundsätzlich ist aber auch denkbar, eine außermittige Anordnung, beispielsweise in Längsrichtung, zu wählen, etwa um für bestimmte Anwendungsfälle das Kurvenfahrverhalten und entsprechende Kurvenradien zu ermöglichen.

Die Rollen des Fahrgestells können insbesondere als Lenkrollen ausgeführt sein, so dass das Transportgerät in alle denkbaren Richtungen verfahrbar ist.

Beispielweise können aber auch zwei starre Rollen (sogenannte Bockrollen) eingesetzt werden. Bei einer derartigen Lösung sind diese vorzugsweise an der Seite des Transportgerätes angeordnet, an der auch die Deichsel angeordnet ist.

Neben der Anwendung als Kommissionierwagen kann das Transportgerät bzw. auch nur die Antriebseinheit mit dem Antriebsrad als Unterbau bzw. Antrieb für Montagegestelle, als Antrieb für Ladungsträger, als Transportwagen oder als Antrieb bei autonomen Fahrsystemen verwendet werden.

Weitere Einzelheiten und Vorteile der Erfindung sollen nun anhand eines in der Zeichnung dargestellten Ausführungsbeispiels näher erläutert werden.

### Es zeigen

- Fig. 1: eine perspektivische Ansicht von oben auf ein Ausführungsbeispiel eines erfindungsgemäßen Transportgerätes;
- Fig. 2: eine Ansicht von unten auf das Transportgerät gemäß Fig. 1; und
- Fig. 3: eine Seitenansicht auf das Transportgerät gemäß Fig. 1.

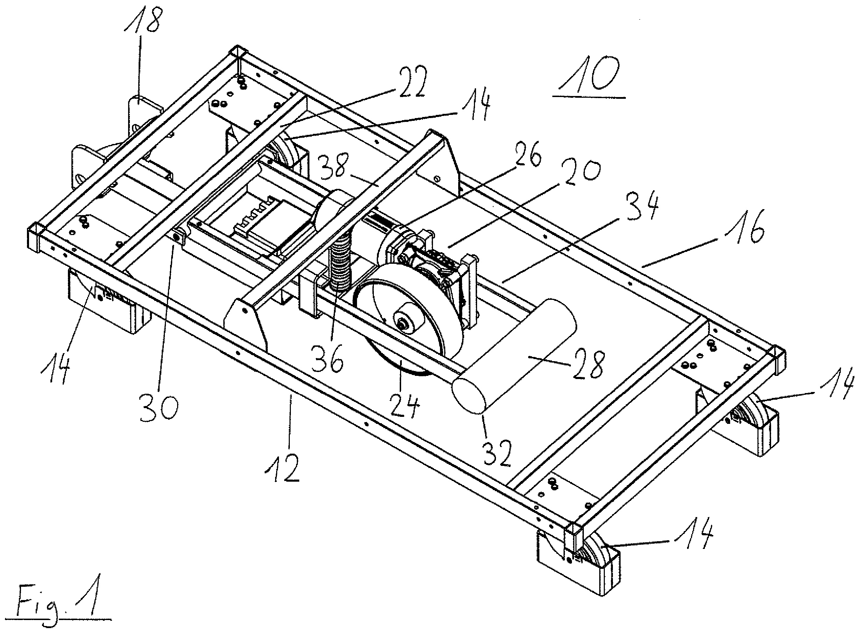

Fig. 1 zeigt in perspektivischer Ansicht von oben ein von Hand bewegbares Transportgerät 10, hier in der Ausführungsform eines Untergestells eines Kommissionierwagens.

Das Transportgerät 10 weist ein Fahrgestell 12 auf. Das Fahrgestell 12 ist rechteckig ausgebildet und weist in seinen Ecken jeweils eine baugleiche Rolle 14 auf, die als Lenkrolle ausgebildet ist (drehbar in alle Richtungen).

Auf dem Fahrgestell 12 ist auf der den Rollen 14 abgewandten Seite mit den Oberkanten des Rahmens des Fahrgestells 12 eine Abstellvorrichtung 16 zum Ab- bzw. Einstellen von Ware vorgesehen.

An einer Frontseite des Fahrgestells 12 ist ein Grundgestell 18 für die Befestigung einer verschwenkbaren Deichsel, wie sie bereits aus dem Stand der Technik bekannt ist, vorgesehen.

Das Transportgerät 10 weist weiter einen Antriebsradschwenkbügel 20 auf, der rahmenartig ausgebildet ist.

Der Antriebsradschwenkbügel 20 ist verschwenkbar an einer Querstrebe 22 des Fahrgestells 12 angeordnet.

Am Antriebsradschwenkbügel 20 sind ein Antriebsrad 24, eine Antriebseinrichtung 26 und ein Zusatzgewicht 28 vorgesehen und angeordnet.

Der Antriebsradschwenkbügel 20 ist mit einem ersten Ende 30 schwenkbar am Fahrgestell 12, nämlich an der Querstrebe 22 angelenkt. Des Weiteren weist der Antriebsradschwenkbügel 20 ein zweites freies Ende 32 auf, das nicht am Fahrgestell 12 angelenkt ist.

Entlang der Längsachse des Antriebsradschwenkbügels 20 sind Antriebseinrichtung 26, Antriebsrad 24,

und das Zusatzgewicht 28 nacheinander längs entlang des Antriebsradschwenkbügels 20 angeordnet.

Das Antriebsrad 24 ist dabei zwischen der Antriebseinrichtung 26 und dem Zusatzgewicht 28 angeordnet.

In der gezeigten Ausführungsform ist das Zusatzgewicht 28 am freien Ende 32 des Antriebsradschwenkbügels 20 angeordnet.

Grundsätzlich kann aber auch vorgesehen sein, dass die Antriebseinrichtung 26 am freien Ende 32 angeordnet wird.

Im gezeigten Ausführungsbeispiel ist das Zusatzgewicht 28 als Rundwelle ausgebildet, die eine Schmalseite des als Rahmen ausgebildeten Antriebsschwenkbügels 20 ausbildet.

Im Zusatzgewicht 28 kann beispielsweise eine Energiequelle, insbesondere eine Batterie oder ein Akkumulator der Antriebseinrichtung 26 angeordnet sein.

Im gezeigten Ausführungsbeispiel handelt es sich jedoch nur um eine Rundwelle, die aus Metall ausgebildet ist, beispielsweise aus Stahl bzw. als Bleigewicht.

In dem Rahmen 34 des Antriebsradschwenkbügels 20 ist mittig zum freien Ende 32 hin das Antriebsrad 24 aufgehängt.

Des Weiteren ist noch eine Feder 36 vorgesehen, die die Funktion einer Druckfeder hat und die sowohl am Antriebsradschwenkbügel 20 mit einem Ende als auch mit ihrem anderen Ende an einer weiteren Querstrebe 38 des Fahrgestells 12 angelenkt ist.

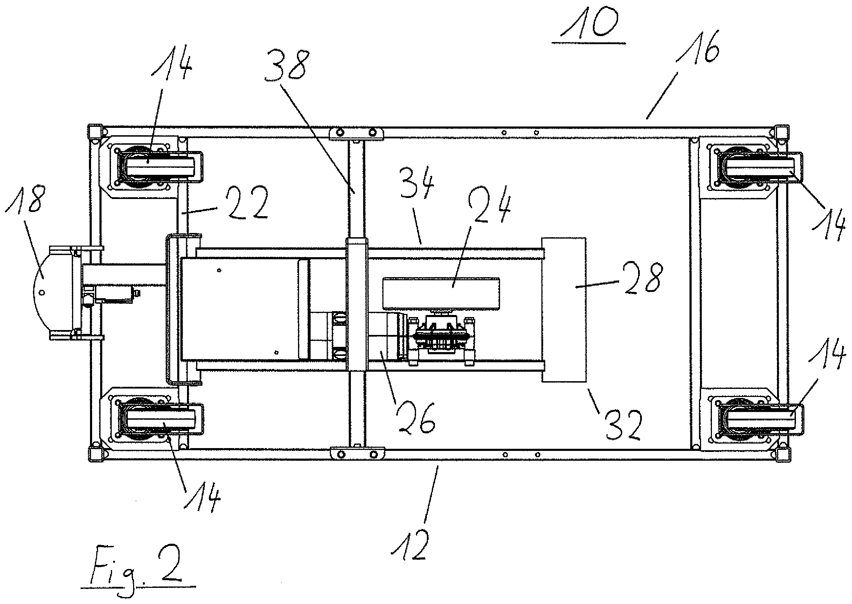

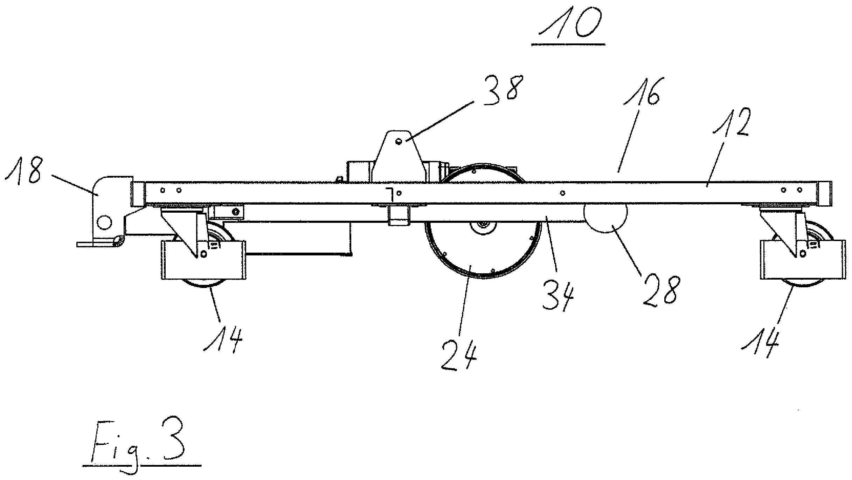

Fig. 2 zeigt eine Draufsicht auf das Transportgerät 10 gemäß Fig. 1 und Fig. 3 eine Seitenansicht auf das Transportgerät 10 gemäß Fig. 1.

Die Funktion des Transportgerätes 10 lässt sich insbesondere wie folgt beschreiben:
Der freischwingende Antriebsradschwenkbügel 20 trägt ein fünftes Rad des Transportgerätes 10, das seinerseits mit vier jeweils eckseitig angeordneten Rollen 14 frei in jede Richtung verfahrbar ist.

Um die Manövrierfähigkeit des Transportgeräts 10 zu verbessern und auch das Schieben, aber auch das Verzögern des Transportgerätes 10 zu erleichtern, kann das Transportgerät 10 über das Antriebsrad 24 angetrieben werden.

Der Antrieb erfolgt elektromotorisch über die Antriebseinrichtung 26.

Um das Fahrverhalten und insbesondere die Kurvenfahrfähigkeit, eine sichere Anlage des Antriebsrades 24 auf dem Untergrund und auch insgesamt die Kraftübertragung von Antriebsrad 24 auf den Untergrund zu verbessern, wird neben dem Eigengewicht, das auf das Antriebsrad 24 wirkt, nunmehr auch gleichzeitig zu beiden Seiten des Antriebsrades 24 eine Gewichtskraft über die Antriebseinrichtung 26 und das Zusatzgewicht 28 ausgeübt.

Des Weiteren wird durch die Feder 36, die als Druckfeder wirkt, eine zusätzliche Federkraft auf den Antriebsradschwenkbügel 20 ausgeübt, die bewirkt, dass der Antriebsradschwenkbügel 20 vom Fahrgestell 12 weggedrückt wird. Dies erhöht zusätzlich die Anpressung des Antriebsrades 24 auf den Untergrund.

Hierdurch wird eine optimale Antriebskraft für das Antriebsrad 24 erreicht, wodurch das Fahrverhalten und die Kraftübertragung vom Antriebsrad 24 auf den Untergrund deutlich verbessert werden kann im Vergleich zu den bisher aus dem Stand der Technik bekannten Lösungen.

### Bezugszeichen

- 10: Transportgerät
- 12: Fahrgestell
- 14: Rolle
- 16: Abstellvorrichtung
- 18: Grundgestell
- 20: Antriebsradschwen kbügel
- 22: Querstrebe
- 24: Antriebsrad
- 26: Antriebseinrichtung
- 28: Zusatzgewicht
- 30: erstes Ende
- 32: zweites freies Ende
- 34: Rahmen
- 36: Feder
- 38: Querstrebe

## Patentansprüche

1. Von Hand bewegbares Transportgerät (10) mit einem mit Rollen (14) versehenen Fahrgestell (12), mit einer mit dem Fahrgestell (12) verbundenen Abstellvorrichtung (16) zum Ab- bzw. Einstellen von Ware und mit einem mit dem Fahrgestell (12) verbundenen Antriebsradschwenkbügel (20), an dem ein Antriebsrad (24), eine Antriebseinrichtung (26) und ein Zusatzgewicht (28) angeordnet ist, wobei das Antriebsrad (24) durch die Antriebseinrichtung (26) elektromotorisch antreibbar und wobei das Antriebsrad (24) zum Antrieb des Transportgerätes (10) vorgesehen ist, wobei der Antriebsradschwenkbügel (20) ein erstes am Fahrgestell (12) schwenkbar angelenktes erstes Ende (30) und ein zweites freies Ende (32) aufweist, wobei zumindest das Antriebsrad (24), eine erste Masse und das Zusatzgewicht (28) am Antriebsradschwenkbügel (20) angeordnet sind und wobei entweder die erste Masse oder das Zusatzgewicht (28) am freien Ende (32) angeordnet ist, wobei der Antriebsradschwenkbügel (20) einen Rahmen (34) ausbildet, in dem das Antriebsrad (24) aufgehängt ist, und dass eine Feder (36) vorgesehen ist, mittels derer der Antriebsradschwenkbügel (20) gefedert ist, wobei das Fahrgestell (12) eine Querstrebe (38) aufweist, an der die Feder (36) angelenkt ist,
**dadurch gekennzeichnet, dass** das Fahrgestell (12) eine weitere Querstrebe (22) aufweist, die innerhalb des Rahmens des Fahrgestells (12) angeordnet ist und wobei an dieser weiteren Querstrebe (22) das erste Ende (30) des Antriebsradschwenkbügels (20) angelenkt ist, und wobei das zweite freie Ende (32) nicht am Fahrgestell (12) angelenkt ist, wobei weiter nacheinander längs entlang der Längsachse des Antriebsradschwenkbügels (20) die Antriebseinrichtung (26), das Antriebsrad (24) und das Zusatzgewicht (28) angeordnet sind und wobei die Feder (36) am Antriebsradschwenkbügel (20) auf Höhe der Antriebseinrichtung (26) angelenkt ist.

2. Von Hand bewegbares Transportgerät (10) nach Anspruch 1, **dadurch gekennzeichnet, dass** die erste Masse zumindest teilweise durch die Antriebseinrichtung (26) ausgebildet ist.

3. Von Hand bewegbares Transportgerät (10) nach Anspruch 1 oder Anspruch 2, **dadurch gekennzeichnet, dass** das Zusatzgewicht (28) am freien Ende (32) des Antriebsradschwenkbügels (20) angeordnet ist.

4. Von Hand bewegbares Transportgerät (10) nach einem der vorhergehenden Ansprüche, **dadurch gekennzeichnet, dass** die Antriebseinrichtung (26) zumindest teilweise am freien Ende (32) angeordnet ist.

5. Von Hand bewegbares Transportgerät (10) nach einem der vorhergehenden Ansprüche, **dadurch gekennzeichnet, dass** das Zusatzgewicht (28) zumindest teilweise als Rundwelle ausgebildet ist.

6. Von Hand bewegbares Transportgerät (10) nach einem der vorhergehenden Ansprüche, **dadurch gekennzeichnet, dass** im Zusatzgewicht (28) eine Energiequelle, insbesondere eine Batterie oder ein Akkumulator angeordnet ist.

## Claims

1. Manually movable transport device (10) with a chassis (12) which is provided with rollers (14), with a depositing apparatus (16) which is connected to the chassis (12) for depositing or positioning goods, and with a drive wheel swivel bracket (20) which is connected to the chassis (12) and on which a drive wheel (24), a drive device (26) and an additional weight (28) are arranged, it being possible for the drive wheel (24) to be driven by electric motor by way of the drive device (26), and the drive wheel (24) being provided for driving the transport device (10), the drive wheel swivel bracket (20) having a first end (30) which is articulated pivotably on the chassis (12) and a second free end (32), at least the drive wheel (24), a first mass and the additional weight (28) being arranged on the drive wheel swivel bracket (20), and either the first mass or the additional weight (28) being arranged at the free end (32), the drive wheel swivel bracket (20) configuring a frame (34), in which the drive wheel (24) is suspended, and a spring (36) being provided, by means of which the drive wheel swivel bracket (20) is suspended, the chassis (12) having a transverse strut (38), on which the spring (36) is articulated,
**characterized in that**
the chassis (12) has a further transverse strut (22) which is arranged within the frame of the chassis (12), and the first end (30) of the drive wheel swivel bracket (20) being articulated on the said further transverse strut (22), and the second free end (32) not being articulated on the chassis (12), the drive device (26), the drive wheel (24) and the additional weight (28) being arranged, furthermore, longitudinally one after another along the longitudinal axis of the drive wheel swivel bracket (20), and the spring (36) being articulated on the drive wheel swivel bracket (20) at the level of the drive device (26).

2. Manually movable transport device (10) according to Claim 1, **characterized in that** the first mass is configured at least partially by way of the drive device (26) .

3. Manually movable transport device (10) according to Claim 1 or Claim 2, **characterized in that** the additional weight (28) is arranged at the free end (32) of the drive wheel swivel bracket (20).

4. Manually movable transport device (10) according to one of the preceding claims, **characterized in that** the drive device (26) is arranged at least partially at the free end (32).

5. Manually movable transport device (10) according to one of the preceding claims, **characterized in that** the additional weight (28) is configured at least partially as a round shaft.

6. Manually movable transport device (10) according to one of the preceding claims, **characterized in that** an energy source, in particular a battery or an accumulator, is arranged in the additional weight (28).

## Revendications

1. Appareil de transport (10) déplaçable manuellement comprenant un mécanisme de roulement (12) pourvu de galets (14), un dispositif de retrait (16) relié au mécanisme de roulement (12) et destiné à retirer et mettre des marchandises et un étrier de roue d'entraînement pivotant (20) qui est relié au mécanisme de roulement (12) et au niveau duquel sont disposés une roue d'entraînement (24), un mécanisme d'entraînement (26) et un poids supplémentaire (28), la roue d'entraînement (24) pouvant être entraînée par un moteur électrique par le biais d'un mécanisme d'entraînement (26) et la roue d'entraînement (24) étant prévue pour entraîner l'appareil de transport (10), l'étrier de roue d'entraînement pivotant (20) comportant une première extrémité (30) reliée de manière pivotante au mécanisme de roulement (12) et une deuxième extrémité libre (32), au moins la roue d'entraînement (24), une première masse et le poids supplémentaire (28) étant disposés au niveau de l'étrier de roue d'entraînement pivotant (20) et la première masse ou bien le poids supplémentaire (28) étant disposé(e) à l'extrémité libre (32), l'étrier de roue d'entraînement pivotant (20) formant un cadre (34) dans lequel la roue d'entraînement (24) est suspendue, et un ressort (36) étant prévu au moyen duquel l'étrier de roue d'entraînement pivotant (20) est suspendu, le mécanisme de roulement (12) comportant une traverse (38) à laquelle le ressort (36) est relié de manière articulée,
**caractérisé en ce que**
le mécanisme de roulement (12) comporte une autre traverse (22) qui est disposée à l'intérieur du cadre du mécanisme de roulement (12) et la première extrémité (30) de l'étrier de roue d'entraînement pivotant (20) est reliée de manière articulée à cette autre traverse (22), et la deuxième extrémité libre (32) n'est pas reliée de manière articulée au mécanisme de roulement (12), le dispositif d'entraînement (26), la roue d'entraînement (24) et le poids supplémentaire (28) étant disposés successivement en série le long de l'axe longitudinal de l'étrier de roue d'entraînement pivotant (20), et le ressort (36) étant relié de manière articulée à l'étrier de roue d'entraînement pivotant (20) au niveau du mécanisme d'entraînement (26) .

2. Appareil de transport mobile manuellement (10) selon la revendication 1, **caractérisé en ce que** la première masse est au moins partiellement formée par le mécanisme d'entraînement (26).

3. Appareil de transport mobile manuellement (10) selon la revendication 1 ou la revendication 2, **caractérisé en ce que** le poids supplémentaire (28) est disposé à l'extrémité libre (32) de l'étrier de roue d'entraînement pivotant (20).

4. Appareil de transport mobile manuellement (10) selon l'une des revendications précédentes, **caractérisé en ce que** le mécanisme d'entraînement (26) est au moins partiellement disposé à l'extrémité libre (32).

5. Appareil de transport mobile manuellement (10) selon l'une des revendications précédentes, **caractérisé en ce que** le poids supplémentaire (28) est au moins partiellement réalisé sous la forme d'un arbre rond.

6. Appareil de transport mobile manuellement (10) selon l'une des revendications précédentes, **caractérisé en ce qu'**une source d'énergie, notamment une batterie ou un accumulateur, est disposée dans le poids supplémentaire (28).
